(19) Europäisches Patentamt

European Patent Office

Office européen des brevets

(11) **EP 2 609 711 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **11757163.8**

(22) Anmeldetag: **19.08.2011**

(51) Int Cl.:
*H04L 9/08* <sup>(2006.01)</sup>  *H04L 9/30* <sup>(2006.01)</sup>
*H04L 9/32* <sup>(2006.01)</sup>

(86) Internationale Anmeldenummer:
**PCT/EP2011/004193**

(87) Internationale Veröffentlichungsnummer:
**WO 2012/031681 (15.03.2012 Gazette 2012/11)**

(54) **VERFAHREN ZUM AUTHENTISIEREN EINES PORTABLEN DATENTRÄGERS**

METHOD FOR AUTHENTICATING A PORTABLE DATA STORAGE MEDIUM

PROCÉDÉ POUR AUTHENTIFIER UN SUPPORT DE DONNÉES PORTATIF

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **23.08.2010 DE 102010035098**

(43) Veröffentlichungstag der Anmeldung:
**03.07.2013 Patentblatt 2013/27**

(73) Patentinhaber: **Giesecke+Devrient Mobile
Security GmbH
81677 München (DE)**

(72) Erfinder: **MEISTER, Gisela
81737 München (DE)**

(56) Entgegenhaltungen:
**EP-A1- 0 313 967       WO-A2-2006/089101
DE-A1- 10 141 396      DE-A1- 19 527 715
DE-A1-102008 028 701   DE-A1-102008 055 076
US-B2- 6 336 188**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Authentisierung eines portablen Datenträgers gegenüber einer Terminaleinrichtung sowie einen entsprechend eingerichteten Datenträger und eine Terminaleinrichtung.

EP 0 313 967 A1 zeigt ein Verfahren zur Echtheitsprüfung eines Datenträgers mit integriertem Schaltkreis. Zur Echtheitsprüfung von Datenträgern mit einem integrierten Schaltkreis, Speicher und Logikeinrichtungen werden für jeden Schaltkreis individuelle zufallsbedingte Eigenschaften dieses Schaltkreises bestimmt und daraus jeden Schaltkreis kennzeichnende Daten gewonnen.

Ein portabler Datenträger, beispielsweise in Form eines elektronischen Ausweisdokuments, umfasst einen integrierten Schaltkreis mit einem Prozessor und einem Speicher. In dem Speicher sind einen Nutzer des Datenträgers betreffende Daten gespeichert. Auf dem Prozessor ist eine Authentisierungsapplikation ausführbar, über welche sich der Datenträger gegenüber einer Terminaleinrichtung authentisieren kann, im Fall eines Ausweisdokuments beispielsweise bei einer Grenzkontrolle oder dergleichen.

Während eines solchen Authentisierungsverfahrens wird eine gesicherte Datenkommunikation zwischen dem Datenträger und der Terminaleinrichtung vorbereitet, indem ein geheimer Kommunikationsschlüssel zur symmetrischen Verschlüsselung einer nachfolgenden Datenkommunikation vereinbart wird, beispielsweise mittels des bekannten Schlüsselaustauschverfahrens nach Diffie und Hellman oder anderen geeigneten Verfahren. Weiterhin verifiziert in der Regel zumindest das Terminal die Authentizität des Datenträgers, beispielsweise anhand eines Zertifikats.

Zur Durchführung eines Verfahrens zur Vereinbarung des geheimen Kommunikationsschlüssels ist es notwendig, dass sowohl das Terminal als auch der Datenträger jeweils einen geheimen Schlüssel und einen öffentlichen Schlüssel bereitstellen. Das Zertifikat des Datenträgers kann beispielsweise dessen öffentlichen Schlüssel betreffen.

Wird jeder Datenträger einer Menge oder Gruppe von Datenträgern mit einem individuellen Schlüsselpaar, bestehend aus einem öffentlichen Schlüssel und einem geheimen Schlüssel, personalisiert, ergeben sich Probleme hinsichtlich der Anonymität des Nutzers des Datenträgers. Es wäre dann möglich, jede Verwendung des Datenträgers eindeutig dem entsprechenden Nutzer zuzuordnen und auf diese Weise beispielsweise ein vollständiges Bewegungsprofil des Nutzers anzulegen.

Um diesem Aspekt gerecht zu werden, ist vorgeschlagen worden, eine Mehrzahl oder Gruppe von Datenträgern mit jeweils einem identischen, so genannten Gruppenschlüsselpaar, bestehend aus einem öffentlichen Gruppenschlüssel und einem geheimen Gruppenschlüssel, auszustatten. Damit kann die Anonymität eines Nutzers, zumindest innerhalb der Gruppe, wieder hergestellt werden. Nachteilig an dieser Lösung ist, dass in dem Fall, dass einer der Datenträger der Gruppe kompromittiert wird, die gesamte Gruppe von Datenträgern ausgetauscht werden muss. Wenn beispielsweise der geheime Gruppenschlüssel eines der Datenträger der Gruppe ausgespäht worden ist, kann keiner der Datenträger der Gruppe sicher weiterverwendet werden. Aufwand und Kosten einer notwendigen Austauschaktion können enorm sein.

DE 195 27 715 A1, DE 10141396 A1, DE 10 2008 028701 A1, WO 2006/089101 A2, DE 10 2008 055076 A1 und US 636188 B2 beschreiben allgemeineren Stand der Technik.

In EP 0 313 967 A1 verwendet eine Karte einen Parameter X1 und karteninterne Messdaten M zur Berechnung eines geheimen Gruppenschlüssels SK, welcher für eine Gruppe von Karten einheitlich ist. Mit Hilfe des berechneten geheimen Gruppenschlüssels SK authentisiert sich die Karte off-line gegenüber einem Terminal, das den zugehörigen öffentlichen Gruppenschlüssel speichert. Das Dokument zeigt den Oberbegriff der unabhängigen Ansprüche.

Aufgabe der vorliegenden Erfindung ist es, ein Authentisierungsverfahren vorzuschlagen, welches die Anonymität des Nutzers wahrt und bei dem die Kompromittierung eines der Datenträger keine negativen Auswirkungen auf die Sicherheit anderer Datenträger hat.

Diese Aufgabe wird durch ein Verfahren, einen Datenträger und ein System mit den Merkmalen der nebengeordneten Ansprüche gelöst. Vorteilhafte Ausgestaltungen und Weiterbildungen sind in den abhängigen Ansprüchen angegeben.

Bei einem erfindungsgemäßen Verfahren zum Authentisieren eines portablen Datenträgers gegenüber einer Terminaleinrichtung werden ein öffentlicher Schlüssel und ein geheimer Schlüssels des Datenträgers sowie ein öffentlicher Sitzungsschlüssel und ein geheimer Sitzungsschlüssel der Terminaleinrichtung verwendet. Der Datenträger verwendet als öffentlichen Schlüssel einen öffentlichen Gruppenschlüssel. Als geheimen Schlüssel verwendet der Datenträger einen geheimen Schlüssel, der aus einem dem öffentlichen Gruppenschlüssel zugeordneten geheimen Gruppenschlüssel abgeleitet wird.

In dem erfindungsgemäßen Verfahren ist ein Speichern des geheimen Gruppenschlüssels in dem Datenträger nicht mehr notwendig. Demnach kann ein solcher bei einem Angriff auf den Datenträger auch nicht ausgespäht werden. Geheime Sitzungsschlüssel anderer, nicht angegriffener Datenträger einer Gruppe von Datenträgern können weiterverwendet werden.

Ein Verfolgen des Datenträgers anhand eines datenträgerindividuellen öffentlichen Schlüssels ist nicht möglich, da ein solcher in dem Datenträger nicht vorliegt. Als öffentlicher Schlüssel wird der öffentliche Gruppenschlüssel verwendet, welcher nicht datenträgerindividuell ist, sondern für alle Datenträger der Gruppe identisch ist. In dieser Hinsicht sind sämtliche Datenträger einer Gruppe ununterscheidbar. Damit kann die Anonymität des Nutzers gewahrt werden.

Vorzugsweise wird vor einer weiteren Ausführung des Authentisierungsverfahrens der geheime Schlüssel des Datenträgers jeweils durch einen aus dem geheimen Schlüssel abgeleiteten geheimen Sitzungsschlüssels des Datenträgers ersetzt. D.h. der Datenträger führt das Authentisierungsverfahren bei jeder Ausführung mit einem anderen geheimen Schlüssel aus. Der geheime Schlüssel des Datenträgers ist damit als geheimer Sitzungsschlüssel des Datenträgers ausgebildet.

Unter einem Sitzungsschlüssel wird im Rahmen der vorliegenden Erfindung stets ein Schlüssel verstanden, welcher für jede "Sitzung", d.h. hier bei jeder Durchführung des Authentisierungsverfahrens, neu bestimmt wird. In der Regel sind verschiedene Sitzungsschlüssel verschieden, d.h. der Wert eines Sitzungsschlüssels in einer ersten Sitzung unterscheidet sich von dem Wert des Sitzungsschlüssels einer nachfolgenden zweiten Sitzung. Es ist dabei nicht möglich, von einem früheren Sitzungsschlüssel auf einen nachfolgend verwendeten zu schließen und umgekehrt.

Ein Verfolgen des Nutzers des Datenträgers anhand des geheimen Schlüssels des Datenträgers ist demnach ebenso wenig möglich. Ein geheimer Schlüssel des Datenträgers könnte zwar auch in anderer, bekannter Weise eingesetzt werden, beispielsweise bei einem challenge-response-Verfahren zur Authentifizierung gegenüber einer Datenverarbeitungseinrichtung. Dadurch, dass der geheime Schlüssel gemäß der vorliegenden Erfindung jedoch ein Sitzungsschlüssel ist, d.h. bei jedem Einsatz einen anderen Wert aufweist, kann aus dem geheimen Schlüssel alleine nicht auf die Identität des Datenträgers zurückgeschlossen werden. Damit kann die Anonymität des Nutzers auch in dieser Hinsicht gewahrt werden.

Ein erfindungsgemäßer portabler Datenträger umfasst einen Prozessor, einen Speicher und eine Datenkommunikationsschnittstelle zu einer Terminaleinrichtung sowie eine Authentisierungseinrichtung. Diese ist eingerichtet, eine Authentisierung gegenüber einer Terminaleinrichtung unter Verwendung eines öffentlichen Schlüssels und eines geheimen Schlüssels des Datenträgers sowie eines öffentlichen Sitzungsschlüssels und eines geheimen Sitzungsschlüssels der Terminaleinrichtung durchzuführen. Die Authentisierungseinrichtung ist weiter eingerichtet, den geheimen Schlüssel des Datenträgers jeweils durch einen aus dem geheimen Schlüssel abgeleiteten geheimen Sitzungsschlüssel des Datenträgers zu ersetzten. Auf diese Weise kann, wie beschrieben, jede Durchführung des Authentisierungsverfahrens mit einem sitzungsspezifischen geheimen Schlüssel des Datenträgers erfolgen.

Eine erfindungsgemäße Terminaleinrichtung zur Datenkommunikation mit einem erfindungsgemäßen portablen Datenträger ist eingerichtet, eine Authentisierung gegenüber einem portablen Datenträger unter Verwendung eines öffentlichen Schlüssels und eines geheimen Schlüssels des Datenträgers sowie eines öffentlichen Sitzungsschlüssels und eines geheimen Sitzungsschlüssels der Terminaleinrichtung durchzuführen.

Ein erfindungsgemäßes System umfasst einen erfindungsgemäßen Datenträger sowie eine erfindungsgemäße Terminaleinrichtung. Diese sind jeweils eingerichtet, ein erfindungsgemäßes Authentisierungsverfahren durchzuführen.

Im Rahmen des Verfahrens wird mittels des öffentlichen Gruppenschlüssels und des geheimen Schlüssels des Datenträgers sowie des öffentlichen Sitzungsschlüssels und des geheimen Sitzungsschlüssels der Terminaleinrichtung ein Kommunikationsschlüssel zwischen dem Datenträger und der Terminaleinrichtung vereinbart. Dieser Kommunikationsschlüssel liegt dann nur diesen beiden Parteien vor. Er ist in diesem Sinne ein geheimer Kommunikationsschlüssel. Eine solche Schlüsselvereinbarung kann beispielsweise mittels eines Diffie-Hellman-Schlüsselaustauschverfahrens erfolgen. Andere, vergleichbare Verfahren sind ebenfalls einsetzbar. Das Vereinbaren des Kommunikationsschlüssels kann als eine Form der impliziten Authentisierung zwischen dem Datenträger und der Terminaleinrichtung angesehen werden. Sofern eine nachfolgende, mittels des vereinbarten Kommunikationsschlüssels verschlüsselte Datenkommunikation zwischen dem Datenträger und der Terminaleinrichtung für beide Seiten erfolgreich erfolgen kann, gilt der einen Partei die andere Partei jeweils als erfolgreich authentisiert.

Vorzugsweise wird der als öffentlicher Schlüssel des Datenträgers verwendete öffentliche Gruppenschlüssel durch die Terminaleinrichtung mittels eines Zertifikats des öffentlichen Gruppenschlüssels verifiziert. Dazu kann das entsprechende Zertifikat der Terminaleinrichtung durch den Datenträger in geeigneter Weise zur Verfügung gestellt werden. Der Datenträger kann der Terminaleinrichtung das Zertifikat beispielsweise zusenden. Es ist auch möglich, dass Zertifikat in einem frei auslesbaren Speicherbereich des Datenträgers vorzuhalten. Der Schritt der Verifizierung des Zertifikats kann als Teil eines Authentisierungsverfahrens angesehen werden, bei dem sich der Datenträger gegenüber der Terminaleinrichtung mittels des Zertifikats ausweist. Auf diese Weise kann der Datenträger als ein Datenträger der Gruppe, welche dem Gruppenschlüsselpaar zugeordnet ist, authentisiert werden, jedoch nicht anhand eines datenträgerindividuellen Zertifikats - welches erfindungsgemäß nicht vorgesehen ist - verfolgt werden. Lediglich das allen Datenträgern der Gruppe gleiche Zertifikat des öffentlichen Gruppenschlüssels ist auf dem Datenträger gespeichert, wodurch die Anonymität des Nutzers des Datenträgers auch in dieser Hinsicht gewahrt bleibt.

In gleicher Weise kann sich das Terminal mittels eines ähnlichen Zertifikats gegenüber dem Datenträger ausweisen.

Vorzugsweise wird der geheime Schlüssel des Datenträgers von dem geheimen Gruppenschlüssel unter Verwendung einer ersten Zufallszahl abgeleitet. Dazu kann jede geeignete Operation verwendet werden, welche als Eingabedaten - unter anderem - den geheimen Gruppenschlüssel sowie die erste Zufallszahl aufnehmen zu dem datenträgerindividuellen geheimen Schlüssel verarbeiten kann. Beispielsweise können mathematische Operationen, wie Multiplikation, Exponentiation oder ähnliche, zur Anwendung kommen. Das Ableiten des geheimen Schlüssels aus dem geheimen Gruppenschlüssel kann beispielsweise während der Herstellung des Datenträgers erfolgen, z.B. in der Personalisierungsphase. Der geheime Schlüssel des Datenträgers wird dann in dem Datenträger gespeichert. Auch der öffentliche Gruppenschlüssel und das diesen Schlüssel betreffende Zertifikat können in dieser Phase in den Datenträger eingebracht werden.

Der geheime Sitzungsschlüssel des Datenträgers, welcher jeweils nach einer Ausführung des Authentisierungsverfahrens den aktuellen geheimen Schlüssel des Datenträgers ersetzt, kann auf verschiedene Weisen aus dem aktuellen geheimen Schlüssel abgeleitet werden. Die Ableitung erfolgt in dem Datenträger. Dadurch, dass der ursprüngliche geheime Schlüssel aus dem geheimen Gruppenschlüssel abgeleitet worden ist und jeder Sitzungsschlüssel des Datenträgers aus dem jeweils aktuellen geheimen Schlüssel des Datenträgers abgeleitet wird - welchen er dann ersetzt -, ist auch jeder Sitzungsschlüssel des Datenträgers indirekt aus dem geheimen Gruppenschlüssel abgeleitet. Es ist allerdings nicht möglich, von einem geheimen Sitzungsschlüssel des Datenträgers auf den geheimen Gruppenschlüssel zu schließen.

Ein Ersetzen des geheimen Schlüssels durch den abgeleiteten geheimen Sitzungsschlüssel des Datenträgers kann beispielsweise derart erfolgen, dass der geheime Schlüssel durch den abgeleiteten Sitzungsschlüssel "überschrieben" wird, d.h. der geheime Schlüssel nimmt den Wert des abgeleiteten Sitzungsschlüssels an. Der vorhergehende Wert des geheimen Schlüssels wird gelöscht. D.h. der Datenträger verfügt stets über "den" geheimen Schlüssel, welcher in dem erfindungsgemäßen Verfahren verwendet wird. Allerdings ändert sich der Wert des geheimen Schlüssels zwischen zwei Ausführungen des Verfahrens. Der Datenträger verfügt somit jeweils über einen sitzungsspezifischen geheimen Schlüssel.

Die Ableitung des geheimen Sitzungsschlüssels aus dem aktuellen geheimen Schlüssel erfolgt basierend auf einem Sitzungsparameter.

Gemäß einer ersten Ausführungsform kann der geheime Sitzungsschlüssel des Datenträgers von dem geheimen Schlüssel unter Verwendung einer Zufallszahl abgeleitet werden. D.h. die Zufallszahl repräsentiert den Sitzungsparameter. Dabei wird für jede Ableitung eines Sitzungsschlüssels des Datenträgers jeweils eine neue Zufallszahl verwendet. Die Zufallszahl kann in dem Datenträger erzeugt werden. Nach dem Ableiten wird die Zufallszahl gelöscht. Damit wird es unmöglich, aus dem abgeleiteten Sitzungsschlüssel auf den zur Ableitung verwendeten geheimen Schlüssel zurückzuschließen.

Gemäß einer alternativen Ausführungsform kann der Sitzungsparameter abhängig von einem durch die Terminaleinrichtung bereitgestellten Wert bestimmt werden. Dieser Wert kann beispielsweise die Form eines öffentlichen Sektorschlüssels der Terminaleinrichtung annehmen und nach einer erfolgten Authentisierung zwischen Datenträger und Terminal dem Datenträger bereitgestellt werden. Dieser Sektorschlüssel wird in dem Datenträger nun zur Ableitung des geheimen Sitzungsschlüssels in geeigneter Weise herangezogen.

Zur Ableitung des geheimen Sitzungsschlüssels des Datenträgers können natürlich auch mehrere Sitzungsparameter, also beispielsweise eine Zufallszahl und ein Terminalparameter, verwendet werden.

Gemäß einer bevorzugten Ausführungsform wird der öffentliche Gruppenschlüssel mittels Exponentiation einer vorgegebenen Primitivwurzel mit dem geheimen Gruppenschlüssel bestimmt. Der ursprüngliche geheime Schlüssel wird in dieser Ausführungsform dann durch Multiplikation des geheimen Gruppenschlüssels mit einer ersten Zufallszahl gebildet. Schließlich wird eine erste Basis des Datenträgers mittels Exponentiation der Primitivwurzel mit dem Reziproken der ersten Zufallszahl gebildet wird.

Ein geheimer Sitzungsschlüssel des Datenträgers wird dann, falls erforderlich, mittels Multiplikation des aktuellen geheimen Schlüssels mit einem Sitzungsparameter bestimmt. Eine Sitzungsbasis bestimmt der Datenträger mittels Exponentiation der ersten Basis mit dem Reziproken des Sitzungsparameters. Die Berechnung einer Sitzungsbasis erfolgt genauso wie die Berechnung eines geheimen Sitzungsschlüssels zur Vorbereitung einer weiteren Durchführung des Authentisierungsverfahrens. Der Sitzungsparameter kann, wie erwähnt, beispielsweise durch eine zweite Zufallszahl oder abhängig von einem Parameter der Terminaleinrichtung vorgegeben werden. Der geheime Schlüssels des Datenträgers wird dann in der beschriebenen Weise durch den geheimen Sitzungsschlüssel des Datenträgers ersetzt. In gleicher Weise wird die erste Basis durch die Sitzungsbasis ersetzt, d.h. der Wert der ersten Basis wird durch den Wert der Sitzungsbasis ersetzt. Damit kann auch die erste Basis des Datenträgers, wie der geheime Schlüssel, als sitzungsspezifisch angesehen werden.

Die erste Basis, d.h. deren aktueller Wert, wird der Terminaleinrichtung durch den Datenträger bereitgestellt, beispielsweise zugesendet oder frei auslesbar vorgehalten.

Die Terminaleinrichtung bestimmt dann ihren öffentlichen Sitzungsschlüssel mittels Exponentiation der durch den Datenträger bereitgestellten ersten Basis mit dem geheimen Sitzungsschlüssel der Terminaleinrichtung. Der geheime Sitzungsschlüssel der Terminaleinrichtung wird von dieser jeweils sitzungsspezifisch erzeugt.

Schließlich sendet die Terminaleinrichtung den wie beschrieben bestimmten öffentlichen Sitzungsschlüssel an den Datenträger.

Damit sind die zur Vereinbarung des Kommunikationsschlüssels notwendigen Daten zwischen dem Datenträger und der Terminaleinrichtung ausgetauscht. Der Datenträger berechnet seinerseits den Kommunikationsschlüssel mittels Exponentiation des empfangenen öffentlichen Sitzungsschlüssels der Terminaleinrichtung mit dem eigenen geheimen Schlüssel. Die Terminaleinrichtung bestimmt den Kommunikationsschlüssel ihrerseits mittels Exponentiation des öffentlichen Gruppenschlüssels, d.h. des öffentlichen Schlüssels des Datenträgers, mit dem eigenen geheimen Sitzungsschlüssel der Terminaleinrichtung.

Anschließend - oder alternativ vor der Vereinbarung des Kommunikationsschlüssels - kann die Terminaleinrichtung auch gemäß dieser Ausführungsform, wie erwähnt, den öffentlichen Schlüssel des Datenträgers, d.h. den öffentlichen Gruppenschlüssel, mittels des dafür von dem Datenträger bereitgestellten Zertifikat überprüfen.

Im Folgenden wird die Erfindung mit Bezug auf die beiliegenden Zeichnungen beispielhaft beschrieben. Darin zeigen:

Figur 1          schematisch eine bevorzugte Ausführungsform eines erfindungsgemäßen Datenträgers,

Figuren 2 und 3      Schritte einer bevorzugten Ausführungsform des erfindungsgemäßen Verfahrens zum Authentisieren des Datenträgers aus Fig. 1 gegenüber einer Terminaleinrichtung, und

Figur 4          zusätzliche Schritte des Verfahrens aus den Fig. 2 und 3 zum Bereitstellen sitzungsspezifischer Datenträgerparameter.

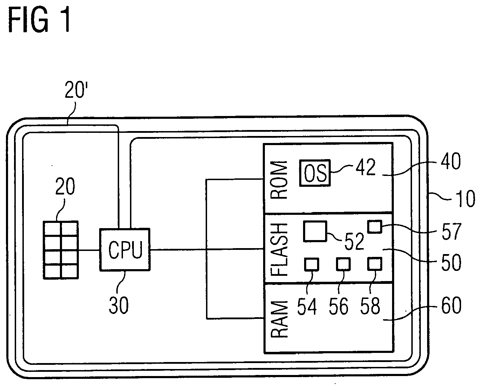

Mit Bezug auf Fig. 1 umfasst ein Datenträger 10, der hier als Chipkarte dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

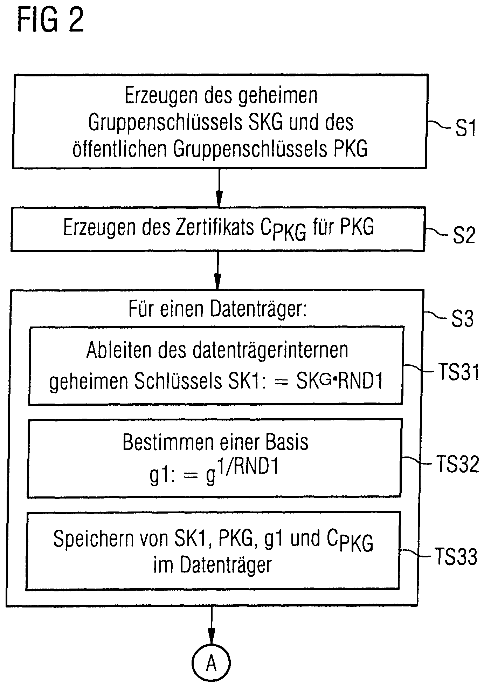

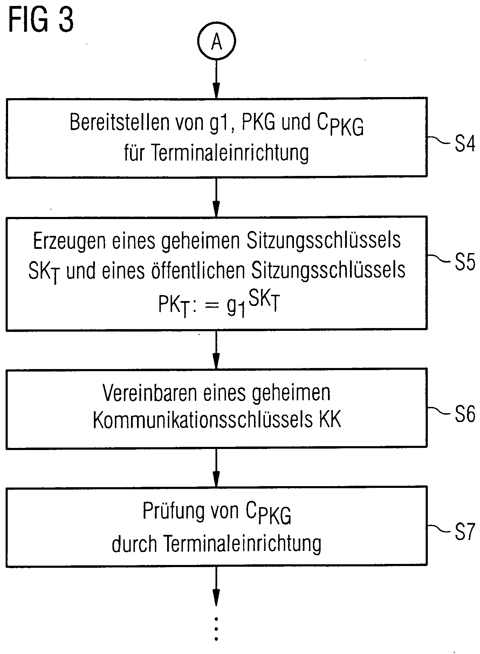

Der Speicher 50 umfasst eine Authentisierungseinrichtung 52, mittels welcher eine Authentisierung des Datenträgers 10 gegenüber einer Terminaleinrichtung durchgeführt werden kann. Dabei finden die ebenfalls in dem Speicher gespeicherten Schlüssel 54, 56, ein weiterer Wert 57 sowie ein digitales Zertifikat 58 ihre Anwendung. Die Funktionsweise der Authentisierungseinrichtung 52, die Schlüssel 54, 56, des Wertes 57 und das Zertifikat 58 sowie deren Rolle während eines Authentisierungsverfahrens werden mit Bezug auf die Figuren 2 und 3 genauer beschrieben. Der Speicher 50 kann weitere Daten enthalten, beispielsweise einen Nutzer betreffende Daten.

Der flüchtige, wiederbeschreibbare RAM-Speicher 60 dient dem Datenträger 10 als Arbeitsspeicher.

Der Datenträger 10 kann, wenn er beispielsweise ein elektronisches Ausweisdokument darstellt, weitere Merkmale umfassen (nicht gezeigt). Diese können sichtbar auf einer Oberfläche des Datenträgers 10 aufgebracht, beispielsweise aufgedruckt, sein und den Nutzer des Datenträgers bezeichnen, beispielsweise durch seinen Namen oder ein Foto.

Mit Bezug auf die Figuren 2 und 3 wird nun eine Ausführungsform des Verfahrens zur Authentisierung des Datenträgers 10 gegenüber einer Terminaleinrichtung genauer beschrieben. In Fig. 2 sind vorbereitende Schritte gezeigt. Diese können beispielsweise während der Herstellung des Datenträgers 10, etwa in einer Personalisierungsphase, durchgeführt werden.

In einem ersten Schritt S1 werden ein geheimer Gruppenschlüssel SKG sowie ein öffentlicher Gruppenschlüssel PKG gebildet. Der öffentliche Gruppenschlüssel PKG berechnet sich als Ergebnis einer Exponentiation einer vorgegebenen Primitivwurzel g modulo einer vorgegebenen Primzahl p. Sämtliche im Folgenden beschriebenen Berechnungen sind modulo der Primzahl p zu lesen, ohne dass dies stets explizit angegeben ist. Die beiden Schlüssel SKG und PKG bilden ein Gruppenschlüsselpaar und stellen die Grundlage für die nachstehend beschriebene Schlüsselarchitektur für eine Gruppe von gleichartigen Datenträgern 10 bereit.

An dieser Stelle ist zu bemerken, dass sämtliche Berechnungen, d.h. Multiplikationen und Exponentiationen, welche im Rahmen der vorliegenden Erfindung dargestellt werden, nicht lediglich über einer primen Restklassengruppe modulo p, sondern über einer beliebigen Gruppe - hier verstanden als mathematischer Struktur und nicht zu verwechseln mit der oben genannten Gruppe von Datenträgern - durchgeführt werden können, beispielsweise auch basierend auf elliptischen Kurven.

In Schritt S2 wird ein Zertifikat $C_{PKG}$ gebildet, welches zur Verifikation des öffentlichen Gruppenschlüssels PKG dient.

Schritt S3 findet während der Personalisierung des Datenträgers 10 statt. Dabei wird der Datenträger 10, welcher einen Datenträger einer vorgegebenen Gruppe von Datenträgern darstellt, mit einem Schlüsselpaar ausgestattet. Der öffentliche Gruppenschlüssel PKG dient dem Datenträger 10 als öffentlicher Schlüssel. Ein geheimer Schlüssel SK1 des Datenträgers 10 wird randomisiert, d.h. unter Verwendung einer Zufallszahl RND1, aus dem geheimen Gruppenschlüssel SKG abgeleitet. Auf diese Weise wird jeder Datenträger 10 der Gruppe mit einem Schlüsselpaar ausgestattet, welches sich von einem entsprechenden Schlüsselpaar eines anderen Datenträgers der Gruppe - aufgrund der randomisierten Komponente bei der Schlüsselableitung - durch jeweils verschiedene geheimen Schlüssel SK1 unterscheidet. Auf der anderen Seite umfassen alle Datenträger 10 der Gruppe denselben öffentlichen Schlüssel. Weiterhin sind sämtliche geheimen Schlüssel der Gruppe von Datenträgern aus demselben geheimen Gruppenschlüssel abgeleitet worden.

In Teilschritt TS31 wird ein datenträgerindividueller geheimer Schlüssel SK1 abgeleitet, indem der geheime Gruppenschlüssel SKG mit der Zufallszahl RND1 multipliziert wird.

In einem weiteren Schritt TS32 wird, ausgehend von der Primitivwurzel g, eine erste Basis g1 berechnet. Dabei wird die Primitivwurzel g mit dem Reziproken der Zufallszahl RND1, welche bereits zum Bestimmen des geheimen Schlüssels verwendet worden ist, exponentiert: $g1 := g^{\wedge}(1/RND1)$. Das Reziproke $1/RND1$ der Zufallszahl RND1 bildet dabei das multiplikative Inverse der Zufallszahl RND1 bezüglich der Multiplikation modulo der Primzahl p.

Die Schlüssel SK1 und PKG werden in Teilschritt TS33 zusammen mit der Basis g1 und dem Zertifikat $C_{PKG}$ in dem Datenträger 10 gespeichert. Die Zufallszahl RND1 wird nicht in dem Datenträger 10 gespeichert. Dieser ist damit eingerichtet, mittels seiner Authentisierungseinrichtung 52 eine Authentisierung gegenüber einer Terminaleinrichtung durchzuführen, wie dies mit Bezug auf Fig. 3 genauer beschrieben wird.

In Schritt S4 stellt der Datenträger 10 der Terminaleinrichtung die zur gegenseitigen Authentisierung notwendigen Daten bereit. Zum Vereinbaren eines Kommunikationsschlüssels KK benötigt die Terminaleinrichtung in der dargestellten Ausführungsform die Basis g1 sowie den öffentlichen Gruppenschlüssel PKG. Zur Verifizierung desselben benötigt die Terminaleinrichtung ein entsprechendes Zertifikat $C_{PKG}$. Diese Parameter des Datenträgers 10 kann der Datenträger 10 an die Terminaleinrichtung senden. Es ist auch möglich, dass diese Werte in einem frei auslesbaren Speicherbereich des Datenträgers 10 gespeichert sind und von der Terminaleinrichtung bei Bedarf ausgelesen werden.

In Schritt S5 bereitet die Terminaleinrichtung die Authentisierung vor. Sie erzeugt dazu einen geheimen Sitzungsschlüssel $SK_T$. Dies kann beispielsweise randomisiert geschehen. Einen öffentlicher Sitzungsschlüssel der Terminaleinrichtung berechnet diese mittels Exponentiation der durch den Datenträger 10 bereitgestellten Basis g1 mit dem eigenen geheimen Sitzungsschlüssel:

$$PK_T := g1^{\wedge SK_T}.$$

Optional kann die Terminaleinrichtung g1 und/ oder $PK_T$ validieren, insbesondere also auf bestimmte Kriterien prüfen. Ein Angriff auf den geheimen Sitzungsschlüssel $SK_T$ mittels geschickt gewählter Werte für g1 kann somit vom Terminal erkannt werden, welches dann den Vorgang abbrechen bzw. die weitere Kommunikation ablehnen kann.

Der öffentliche Sitzungsschlüssel $PK_T$ wird dem Datenträger 10 durch die Terminaleinrichtung bereitgestellt, beispielsweise zugesendet.

Im folgenden Schritt S6 wird nun der Kommunikationsschlüssel KK konkret vereinbart. Der Datenträger 10 berechnet diesen Kommunikationsschlüssel KK durch Exponentiation des öffentlichen Sitzungsschlüssels $PK_T$ der Terminaleinrichtung mit dem eigenen geheimen Schlüssel SK1:

$$
\begin{aligned}
KK_{DT} &:= PK_T^{\wedge SK1} \\
&= (g1^{\wedge SK_T})^{\wedge SK1} && \text{(Def. von } PK_T) \\
&= ((g^{\wedge}(1/RND1)^{\wedge SK_T})^{\wedge SK1} && \text{(Def. von g1)} \\
&= ((g^{\wedge}(1/RND1)^{\wedge SK_T})^{\wedge (SKG*RND1)} && \text{(Def. von SK1)} \\
&= (g^{\wedge}((1/RND1)*SK_T*SKG*RND1) && \text{(Umformung)} \\
&= g^{\wedge}(SK_T*SKG)
\end{aligned}
$$

Die Terminaleinrichtung berechnet den Kommunikationsschlüssel KK mittels Exponentiation des öffentlichen Gruppenschlüssels PKG mit dem geheimen Sitzungsschlüssel $SK_T$ der Terminaleinrichtung:

$$KK_T := PKG^{\wedge SK_T}$$
$$= (g^{\wedge}SKG)^{\wedge SK_T} \qquad \text{(Def. von PKG)}$$
$$= g^{\wedge}(SK_T * SKG) \qquad \text{(Umformung)}$$

Es zeigt sich also, dass der Datenträger 10 und die Terminaleinrichtung aufgrund der ihnen jeweils vorliegenden Daten zu demselben Ergebnis gelangen.

In Schritt S7 schließlich prüft die Terminaleinrichtung das Zertifikat $C_{PKG}$ des öffentlichen Gruppenschlüssels PKG. Diese Prüfung des Zertifikats kann alternativ auch vor dem Vereinbaren des Kommunikationsschlüssels KK in Schritt S6 und/oder des geheimen Sitzungsschlüssels $SK_T$ in Schritt S5 erfolgen.

Damit ist die Authentisierung zwischen dem Datenträger 10 und der Terminaleinrichtung abgeschlossen.

Damit der Datenträger 10 bei nachfolgenden, weiteren Authentisierungen mittels des beispielhaft beschriebenen Verfahrens gegenüber derselben oder einer anderen Terminaleinrichtung nicht identifiziert und eindeutig einem Nutzer zugeordnet werden kann, werden in dem Datenträger 10 sitzungsspezifische Datenträgerparameter bereitgestellt. Dies betrifft den geheimen Schlüssel SK1 sowie die Basis g1. Diese wird, wie beschrieben, im Rahmen des Authentisierungsverfahrens an die Terminaleinrichtung übertragen oder dieser auf andere Weise bereitgestellt. Eine unveränderte, datenträgerindividuelle Basis g1 könnte somit zur Identifizierung des Datenträgers 10 verwendet werden. Dasselbe gilt für einen geheimen Schlüssel SK1 des Datenträgers 10, sofern dieser statisch datenträgerindividuell wäre und beispielsweise im Rahmen eines challenge-response-Verfahrens eingesetzt werden würde.

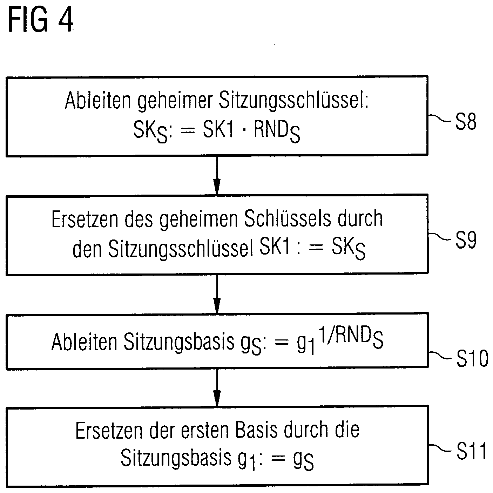

Die datenträgerinterne Erzeugung sitzungsspezifischer Datenträgerparameter wird im Folgenden mit Bezug auf Fig. 4 beschrieben.

In Schritt S8 ist das Ableiten eines geheimen Sitzungsschlüssels $SK_S$ in dem Datenträger 10 gezeigt. Dazu wird ein Sitzungsparameter in Form einer Zufallszahl $RNS_S$ in dem Datenträger 10 bereitgestellt. Der aktuelle geheime Schlüssel SK1 wird mit der Zufallszahl $RNS_S$ multipliziert, wodurch ein geheimer Sitzungsschlüssel $SK_S$ des Datenträgers 10 abgeleitet wird:

$$SK_S := SK1 * RNS_S.$$

Anschließend wird in Schritt S9 der Wert des aktuellen geheimen Schlüssels SK1 durch den Wert des Sitzungsschlüssels ersetzt:

$$SK1 := SK_S.$$

Damit ist der geheime Schlüssel SK1 des Datenträgers 10 sitzungsspezifisch. Eine Verfolgung des Datenträgers 10 anhand des geheimen Schlüssels SK1 scheidet aus, da sich dieser zwischen je zwei durchgeführten Authentisierungsverfahren in der beschriebenen Weise ändert.

In gleicher Weise wird, wie in den Schritten S10 und S11 gezeigt, die Basis g1 durch eine Sitzungsbasis $g_S$ ersetzt (g1 := $g_S$), welche sich zuvor dadurch berechnet, dass die Basis g1 mit dem Reziproken der Zufallszahl $RNS_S$ exponentiert wird: $g_S := g1^{\wedge}(1/RNS_S)$. Damit ist auch die Basis g1 des Datenträgers 10 stets sitzungsspezifisch und eine Verfolgung des Datenträgers 10 anhand der an die Terminaleinrichtung übertragenen Basis g1 scheidet aus. Die Zufallszahl $RNS_S$ wird anschließend gelöscht. Ein Rückschluss auf vorherige Sitzungsparameter ist damit ebenfalls ausgeschlossen.

Anstelle der Zufallszahl $RNS_S$ oder zusätzlich dazu kann auch ein anderer Sitzungsparameter verwendet werden. Dieser kann auch von einem von der Terminaleinrichtung, beispielsweise im Anschluss an eine erfolgreiche Authentisierung gegenüber dem Datenträger 10, bereitgestellten Wert abhängen. Der entsprechende Sitzungsparameter wird datenträgerintern abhängig von dem durch die Terminaleinrichtung bereitgestellten Wert berechnet. Ein derart berechneter Sitzungsparameter kann dann beispielsweise anstelle der in den Schritten S8 und S10 verwendeten Zufallszahl $RNS_S$ zur Erzeugung eines geheimen Sitzungsschlüssels bzw. einer Sitzungsbasis herangezogen und anschließend gelöscht werden. Damit besitzt der Datenträger 10 sitzungsspezifische Parameter für das nächste, durchzuführende Authentisierungsverfahren.

Gemäß einer bevorzugten Ausführungsform stellt die Terminaleinrichtung dem Datenträger 10 einen so genannten öffentlichen Sektorschlüssel $PK_{SEC}$ zur Verfügung. Abhängig von diesem kann der Datenträger 10 dann den aktuellen Sitzungsparameter wie nachfolgend beschrieben berechnen.

Der öffentliche Sektorschlüssel $PK_{SEC}$ ist dabei Teil eines Sektorschlüsselpaars $(PK_{SEC}, SK_{SEC})$, wobei der entsprechende geheime Sektorschlüssel $SK_{SEC}$ der Terminaleinrichtung selbst nicht vorliegt, sondern lediglich einer übergeordneten Sperrinstanz, welcher verschiedene Terminaleinrichtungen in verschiedenen so genannten Sektoren unterstellt sind. D.h. die Sperrinstanz verwaltet verschiedene Terminaleinrichtungen in verschiedenen Sektoren, beispielsweise verschiedenen Verwaltungsbezirken oder dergleichen. Das genannte Sektorschlüsselpaar $(PK_{SEC}, SK_{SEC})$ ergänzend kann auch der Datenträger 10 ein entsprechendes Datenträgersektorschlüsselpaar $(PKD_{SEC}, SKD_{SEC})$ umfassen, welches einen geheimen Datenträgersektorschlüssel $SKD_{SEC}$ und einen öffentlichen Datenträgersektorschlüssel $SKD_{SEC}$ umfasst. Letzterer ist in einer Datenbank gespeichert, auf welche die Sperrinstanz Zugriff hat. Die genannten Sektorschlüssel dienen dazu, einen Datenträger 10 zumindest innerhalb eines Sektors durch eine Terminaleinrichtung identifizieren zu können. Diese Identifikation kann auch zu Sperrzwecken durch die Sperrinstanz herangezogen werden.

Die Identifikation des Datenträgers 10 erfolgt anhand eines zwischen der Terminaleinrichtung und dem Datenträger 10 vereinbarten Wertes $I_{SEC}$. Dieser Wert berechnet sich dadurch, dass die Terminaleinrichtung dem Datenträger 10 ihren öffentlichen Sektorschlüssel $PK_{SEC}$ bereitstellt. Der Datenträger 10 leitet daraus mittels seines geheimen Datenträgersektorschlüssels $SKD_{SEC}$ einen Wert ab, beispielsweise wie aus dem Diffie-Hellman-Schlüsselaustauschverfahren bekannt. Dieser Wert wird dann mittels einer Hashfunktion H komprimiert und der Terminaleinrichtung bereitgestellt. Die Terminaleinrichtung vergleicht den erhaltenen Wert $I_{SEC}$ mit einem entsprechenden Wert, welchen die Terminaleinrichtung von der Sperrinstanz erhalten hat. Nur die Sperrinstanz ist in der Lage, abhängig von dem in der Datenbank gespeicherten öffentlichen Datenträgersektorschlüssel $PKD_{SEC}$ und dem geheimen Sektorschlüssel $SK_{SEC}$ ihrerseits den Wert $I_{SEC}$ zu berechnen. Der Wert $I_{SEC}$ ist also sektorabhängig sowie abhängig vom den Datenträger 10. Die Sperrinstanz ist im Besitz sämtlicher geheimer Sektorschlüssel der ihr unterstellten Sektoren.

Der Wert $I_{SEC}$ dient nun innerhalb des Datenträgers 10 als Sitzungsparameter. D.h. die Berechnung des geheimen Sitzungsschlüssels $SK_S$ und der Sitzungsbasis $g_S$ erfolgt analog zu den Schritten S8 und S10 mit $I_{SEC}$ anstelle von $RNS_S$.

Es kann nun vorgesehen sein, in dem Datenträger 10 die erste Basis g1 separat, z.B. als $g_B$, zu speichern. Diese Basis $g_B$ dient, wie nachfolgend beschrieben, zu Prüfzwecken und wird nicht überschrieben. Weiterhin kann für jede Sitzung i, d.h. für jedes durchgeführte Authentisierungsverfahren zwischen dem Datenträger 10 und einer Terminaleinrichtung, der von der Terminaleinrichtung bereitgestellte öffentliche Sektorschlüssel $PK_{SEC;i}$ mit Bezug auf die Sitzung, d.h. die Nummer i der Sitzung in der erfolgten Reihenfolge, in dem Datenträger 10 gespeichert werden. Es handelt sich dabei lediglich um öffentliche Daten. Es besteht somit kein Sicherheitsrisiko, falls diese Daten ausgespäht werden. Diese Daten sind verfahrensgemäß lediglich von der Sperrinstanz auslesbar, wenn dieser der Datenträger 10 zur Überprüfung vorgelegt wird. Anstelle des öffentlichen Schlüssels kann auch die Kennung der Zertifizierungsstelle, z.B. nach ISO/IEC 7816-4 die Herausgeberkennung (Issuer Identification), gespeichert werden.

Da die Sperrinstanz sowohl den öffentlichen Datenträgersektorschlüssel $PKD_{SEC}$ - aus der Datenbank - als auch sämtliche geheimen Sektorschlüssel $SK_{SEC;i}$ für alle ihr unterstellten Sektoren kennt, ist die Sperrinstanz in der Lage, einen Wert $I_{SEC;i}$, welcher zwischen dem Datenträger 10 und einer Terminaleinrichtung eines solchen Sektors in einer Sitzung i vereinbart worden ist, zu bestimmen. Auf diese Weise kann die Sperreinrichtung auf Basis der im Datenträger 10 gespeicherten Werte, d.h. der Basis $g_B$ sowie der öffentlichen Sektorschlüssel $PK_{SEC;i}$ für jede Sitzung i, die aktuell in dem Datenträger vorliegende Basis $g_S$ berechnen und somit validieren. Dazu ist es lediglich erforderlich, dem jeweiligen öffentlichen Sektorschlüssel $PK_{SEC;i}$ zur Sitzung i den entsprechenden Wert $I_{SEC;i}$ zu dieser Sitzung i zuzuordnen und schließlich die Berechnung der aktuellen Basis $g_S$ nachzuvollziehen, indem der Wert $g_B$ (ursprüngliches g1) mit dem Reziproken des Produkts der Werte $I_{SEC;i}$ zu den einzelnen Sitzungen exponentiert wird:

$$g_S := g_B{}^{\wedge}(1/(\,I_{SEC;1}\,{}^{*}I_{SEC;2}\,{}^{*}I_{SEC;3}...\,{}^{*}I_{SEC;n}).$$

Auf diese Weise kann die Sperrinstanz prüfen, ob der Datenträger 10 zur Ableitung der Basis $g_S$ tatsächlich den geheimen Datenträgersektorschlüssel $SKD_{SEC}$ in der vorgeschriebenen Weise verwendet hat. Wäre dies nicht der Fall, würde die im Datenträger aktuell vorliegende Basis von der durch die Sperrinstanz berechnete Basis $g_S$ abweichen. Ein gefälschter Datenträger 10, welcher nicht im Besitz des korrekten geheimen Datenträgersektorschlüssels $SKD_{SEC}$ ist, kann von der Sperrinstanz auf diese Weise eindeutig erkannt und anschließend gegebenenfalls gesperrt werden.

**Patentansprüche**

1. Verfahren zum Authentisieren eines portablen Datenträgers (10) gegenüber einer Terminaleinrichtung unter Verwendung eines öffentlichen Schlüssels (PKG) und eines geheimen Schlüssels (SK1) des Datenträgers (10) sowie eines öffentlichen Sitzungsschlüssels (PKT) und eines geheimen Sitzungsschlüssels (SKT) der Terminaleinrichtung, wobei der Datenträger (10)
   als öffentlichen Schlüssel (PKG) einen öffentlicher Gruppenschlüssel (PKG) verwendet und
   als geheimen Schlüssel (SK1) einen aus einem dem öffentlichen Gruppenschlüssel (PKG) zugeordneten geheimen Gruppenschlüssel (SKG) abgeleiteten geheimen Schlüssel (SK1) verwendet, **dadurch gekennzeichnet, dass** der öffentliche Gruppenschlüssel (PKG) mittels Exponentiation einer vorgegebenen Primitivwurzel (g) mit dem geheimen Gruppenschlüssel (SKG) bestimmt wird, der geheime Schlüssel (SK1) mittels Multiplikation des geheimen Gruppenschlüssels (SKG) mit einer ersten Zufallszahl (RND1) gebildet wird und ein erster Basiswert (g1) mittels einer Exponentiation der Primitivwurzel (g) mit dem Reziproken der ersten Zufallszahl (RND1) gebildet wird, wobei die erste Basis (g1) der Terminaleinrichtung durch den Datenträger (10) bereitgestellt wird, wobei der öffentliche Sitzungsschlüssel (PKT) der Terminaleinrichtung mittels Exponentiation der durch den Datenträger (10) bereitgestellten ersten Basis (g1) mit dem geheimen Sitzungsschlüssel (SKT) der Terminaleinrichtung bestimmt wird.

2. Verfahren nach Anspruch 1, **dadurch gekennzeichnet, dass** vor einer weiteren Ausführung des Authentisierungsverfahrens der geheime Schlüssel (SK1) des Datenträgers (10) durch einen aus dem geheimen Schlüssel (SK1) abgeleiteten geheimen Sitzungsschlüssels (SKS) des Datenträgers (10) ersetzt wird.

3. Verfahren nach Anspruch 1 oder 2, **dadurch gekennzeichnet, dass** mittels des öffentlichen Gruppenschlüssels (PKG) und des geheimen Schlüssels (SK1) des Datenträgers (10) sowie des öffentlichen Sitzungsschlüssels (PKT) und des geheimen Sitzungsschlüssels (SKT) der Terminaleinrichtung ein Kommunikationsschlüssel (KK) zwischen dem Datenträger (10) und der Terminaleinrichtung vereinbart wird, vorzugsweise mittels eines Diffie-Hellman-Schlüsselaustauschverfahrens.

4. Verfahren nach einem der Ansprüche 1 bis 3, **dadurch gekennzeichnet, dass** der als öffentlicher Schlüssel (PKG) des Datenträgers (10) verwendete öffentliche Gruppenschlüssel (PKG) durch die Terminaleinrichtung mittels eines Zertifikats (CPKG) des öffentlichen Gruppenschlüssels (PKG) verifiziert wird.

5. Verfahren nach einem der Ansprüche 1 bis 4, **dadurch gekennzeichnet, dass** der geheime Schlüssel (SK1) aus dem geheimen Gruppenschlüssel (SKG) unter Verwendung einer ersten Zufallszahl (RND1) abgeleitet wird.

6. Verfahren nach einem der Ansprüche 1 bis 5, **dadurch gekennzeichnet, dass** der geheime Sitzungsschlüssel (SKS) des Datenträgers (10) aus dem geheimen Schlüssel (SK1) unter Verwendung eines Sitzungsparameters abgeleitet wird, wobei als Sitzungsparameter zumindest eine zweite Zufallszahl (RNDS) und/oder ein Parameter der Terminaleinrichtung bereitgestellt wird.

7. Verfahren nach Anspruch 1, **dadurch gekennzeichnet, dass** ein geheimer Sitzungsschlüssel (SKS) des Datenträgers (10) mittels Multiplikation des geheimen Schlüssels (SK1) mit einem Sitzungsparameter (RNDS) bestimmt wird und eine Sitzungsbasis (gS) durch Exponentiation der ersten Basis (g1) mit dem Reziproken des Sitzungsparameters (RNDS) gebildet wird, wobei der Sitzungsparameter (RNDS) durch eine zweite Zufallszahl und/oder einen Parameter der Terminaleinrichtung vorgegeben wird und wobei der geheime Schlüssels (SK1) durch den geheimen Sitzungsschlüssel (SKS) sowie die erste Basis (g1) durch die Sitzungsbasis (gS) ersetzt wird.

8. Portabler Datenträger (10), umfassend einen Prozessor (30), einen Speicher (40; 50; 60) und eine Datenkommunikationsschnittstelle (20; 20') zu einer Terminaleinrichtung sowie eine Authentisierungseinrichtung (52), welche eingerichtet ist, eine Authentisierung gegenüber einer Terminaleinrichtung unter Verwendung eines öffentlichen Schlüssels (PKG) und eines geheimen Schlüssels (SK1) des Datenträgers (10) sowie eines öffentlichen Sitzungsschlüssels (PKT) und eines geheimen Sitzungsschlüssels (SKT) der Terminaleinrichtung durchzuführen, wobei die Authentisierungseinrichtung (52) weiter eingerichtet ist, den geheimen Schlüssel (SK1) des Datenträgers (10) durch einen aus dem geheimen Schlüssel (SK1) abgeleiteten geheimen Sitzungsschlüssel (SKS) des Datenträgers (10) zu ersetzten, **dadurch gekennzeichnet, dass** der öffentliche Gruppenschlüssel (PKG) mittels Exponentiation einer vorgegebenen Primitivwurzel (g) mit dem geheimen Gruppenschlüssel (SKG) bestimmt wird, der geheime Schlüssel (SK1) mittels Multiplikation des geheimen Gruppenschlüssels (SKG) mit einer ersten Zufallszahl (RND1) gebildet wird und ein erster Basiswert (g1) mittels einer Exponentiation der Primitivwurzel (g) mit dem Reziproken der ersten Zufallszahl (RND1) gebildet wird, wobei die erste Basis (g1) der Terminaleinrichtung durch den Datenträger (10) bereitgestellt wird, wobei der öffentliche Sitzungsschlüssel (PKT) der Terminaleinrichtung mittels Exponentiation der durch den Datenträger (10) bereitgestellten ersten Basis (g1) mit dem geheimen Sitzungsschlüssel (SKT) der Terminaleinrichtung bestimmt wird.

9. Portabler Datenträger (10) nach Anspruch 8, **dadurch gekennzeichnet, dass** der Datenträger (10) eingerichtet ist, sich gegenüber einer Terminaleinrichtung gemäß einem Verfahren nach einem der Ansprüche 1 bis 7 zu authentisieren.

10. System, umfassend einen portablen Datenträger (10) nach einem der Ansprüche 8 oder 9 sowie eine Terminaleinrichtung, eingerichtet zum Durchführen eines Verfahrens nach einem der Ansprüche 1 bis 7.

## Claims

1. A method for authenticating a portable data carrier (10) to a terminal device while employing a public key (PKG) and a secret key (SK1) of the data carrier (10) as well as a public session key (PKT) and a secret session key (SKT) of the terminal device, wherein the data carrier (10)
   employs as a public key (PKG) a public group key (PKG), and
   employs as a secret key (SK1) a secret key (SK1) derived from a secret group key (SKG) associated with the public group key (PKG), **characterized in that** the public group key (PKG) is determined by means of exponentiation of a specified primitive root (g) with the secret group key (SKG), the secret key (SK1) is formed by means of multiplication of the secret group key (SKG) by a first random number (RND1), and a first base value (g1) is formed by means of an exponentiation of the primitive root (g) with the reciprocal of the first random number (RND1), wherein the first base (g1) of the terminal device is made available by the data carrier (10), wherein the public session key (PKT) of the terminal device is determined by means of exponentiation of the first base (g1) made available by the data carrier (10), with the secret session key (SKT) of the terminal device.

2. The method according to claim 1, **characterized in that** before a further execution of the authentication method the secret key (SK1) of the data carrier (10) is replaced by a secret session key (SKS) of the data carrier (10) that is derived from the secret key (SK1).

3. The method according to claim 1 or 2, **characterized in that** by means of the public group key (PKG) and the secret key (SK1) of the data carrier (10) as well as the public session key (PKT) and the secret session key (SKT) of the terminal device a communication key (KK) is agreed on between the data carrier (10) and the terminal device, preferably by means of a Diffie-Hellman key exchange method.

4. The method according to any of claims 1 to 3, **characterized in that** the public group key (PKG) employed as a public key (PKG) of the data carrier (10) is verified by the terminal device by means of a certificate (CPKG) of the public group key (PKG).

5. The method according to any of claims 1 to 4, **characterized in that** the secret key (SK1) is derived from the secret group key (SKG) while employing a first random number (RND1).

6. The method according to any of claims 1 to 5, **characterized in that** the secret session key (SKS) of the data carrier (10) is derived from the secret key (SK1) while employing a session parameter, there being made available as a session parameter at least a second random number (RNDS) and/or a parameter of the terminal device.

7. The method according to claim 1, **characterized in that** a secret session key (SKS) of the data carrier (10) is determined by means of multiplication of the secret key (SK1) by a session parameter (RNDS), and a session base (gS) is formed by exponentiation of the first base (g1) with the reciprocal of the session parameter (RNDS), the session parameter (RNDS) being specified by a second random number and/or a parameter of the terminal device, and the secret key (SK1) being replaced by the secret session key (SKS), and first base (g1) by the session base (gS).

8. A portable data carrier (10) comprising a processor (30), a memory (40; 50; 60) and a data communication interface (20; 20') to a terminal device as well as an authentication device (52) which is adapted to carry out an authentication to a terminal device while employing a public key (PKG) and a secret key (SK1) of the data carrier (10) as well as a public session key (PKT) and a secret session key (SKT) of the terminal device, wherein the authentication device (52) is further adapted to replace the secret key (SK1) of the data carrier (10) by a secret session key (SKS) of the data carrier (10) that is derived from the secret key (SK1), **characterized in that** the public group key (PKG) is determined by means of exponentiation of a specified primitive root (g) with the secret group key (SKG), the secret key (SK1) is formed by means of multiplication of the secret group key (SKG) by a first random number (RND1), and a first base value (g1) is formed by means of an exponentiation of the primitive root (g) with the reciprocal of the first random number (RND1), wherein the first base (g1) of the terminal device is made available by the data carrier (10), wherein the public session key (PKT) of the terminal device is determined by means of exponentiation of the first base (g1) made available by the data carrier (10), with the secret session key (SKT) of the terminal device.

9. The portable data carrier (10) according to claim 8, **characterized in that** the data carrier (10) is adapted to authenticate itself to a terminal device according to a method according to any of claims 1 to 7.

10. A system comprising a portable data carrier (10) according to either of claims 8 or 9 as well as a terminal device, adapted for carrying out a method according to any of claims 1 to 7.

**Revendications**

1. Procédé d'authentification d'un support de données (10) portable vis-à-vis d'un équipement terminal en utilisant une clé publique (PKG) et une clé secrète (SK1) du support de données (10) ainsi qu'une clé publique de session (PKT) et une clé secrète de session (SKT) de l'équipement terminal, cependant que le support de données (10) utilise comme clé publique (PKG) une clé publique de groupe (PKG), et
utilise comme clé secrète (SK1) une clé secrète (SK1) dérivée d'une clé secrète de groupe (SKG) affectée à la clé publique de groupe (PKG), **caractérisé en ce que** la clé publique de groupe (PKG) est déterminée par exponentiation d'une racine primitive (g) prédéterminée avec la clé secrète de groupe (SKG), que la clé secrète (SK1) est constituée par multiplication de la clé secrète de groupe (SKG) avec un premier nombre aléatoire (RND1), et qu'une première valeur de base (g1) est constituée par une exponentiation de la racine primitive (g) avec la réciproque du premier nombre aléatoire (RND1), cependant que la première base (g1) de l'équipement terminal est mise à disposition par le support de données (10), cependant que la clé publique de session (PKT) de l'équipement terminal est déterminée par exponentiation de la première base (g1), mise à disposition par le support de données (10), avec la clé secrète de session (SKT) de l'équipement terminal.

2. Procédé selon la revendication 1, **caractérisé en ce que**, avant une autre exécution du procédé d'identification, la clé secrète (SK1) du support de données (10) est remplacée par une clé secrète de session (SKS) du support de données (10) dérivée de la clé secrète (SK1).

3. Procédé selon la revendication 1 ou 2, **caractérisé en ce que**, au moyen de la clé publique de groupe (PKG) et de la clé secrète (SK1) du support de données (10) ainsi que de la clé publique de session (PKT) et de la clé secrète de session (SKT) de l'équipement terminal, une clé de communication (KK) est convenue entre le support de données (10) et l'équipement terminal, de préférence au moyen d'un procédé d'échange de clés de Diffie-Hellman.

4. Procédé selon une des revendication de 1 à 3, **caractérisé en ce que** la clé publique de groupe (PKG) utilisée comme clé publique (PKG) du support de données (10) est vérifiée par l'équipement terminal au moyen d'un certificat (CPKG) de la clé publique de groupe (PKG).

5. Procédé selon une des revendications de 1 à 4, cependant que la clé secrète (SK1) est dérivée de la clé secrète de groupe (SKG) en utilisant un premier nombre aléatoire (RND1).

6. Procédé selon une des revendications de 1 à 5, **caractérisé en ce que** la clé secrète de session (SKS) du support de données (10) est dérivée de la clé secrète (SK1) en utilisant un paramètre de session, cependant que, comme paramètre de session, au moins un deuxième nombre aléatoire (RNDS) et/ou un paramètre de l'équipement terminal est mis à disposition.

7. Procédé selon la revendication 1, cependant qu'une clé secrète de session (SKS) du support de données (10) est déterminée par multiplication de la clé secrète (SK1) avec un paramètre de session (RNDS), et qu'une base de session (gS) est constituée par exponentiation de la première base (g1) avec la réciproque du paramètre de session (RNDS), cependant que le paramètre de session (RNDS) est prédéterminé par un deuxième nombre aléatoire et/ou par un paramètre de l'équipement terminal et cependant que la clé secrète (SK1) est remplacée par la clé secrète de session (SKS), de même que la première base (g1) par la base de session (gS).

**8.** Support de données (10) portable comprenant un processeur (30), une mémoire (40; 50; 60) et une interface de communication de données (20; 20') vers un équipement terminal ainsi qu'un équipement d'authentification (52) conçu pour exécuter une authentification vis-à-vis d'un équipement terminal en utilisant une clé publique de groupe (PKG) et une clé secrète (SK1) du support de données (10) ainsi qu'une clé publique de session (PKT) et une clé secrète de session (SKT) de l'équipement terminal, cependant que l'équipement d'authentification (52) est en outre conçu pour remplacer la clé secrète (SK1) du support de données (10) par une clé secrète de session (SKS) du support de données (10) dérivée de la clé secrète (SK1), **caractérisé en ce que** la clé publique de groupe (PKG) est déterminée par exponentiation d'une racine primitive (g) prédéterminée avec la clé secrète de groupe (SKG), que la clé secrète (SK1) est constituée par multiplication de la clé secrète de groupe (SKG) avec un premier nombre aléatoire (RND1), et qu'une première valeur de base (g1) est constituée par une exponentiation de la racine primitive (g) avec la réciproque du premier nombre aléatoire (RND1), cependant que la première base (g1) de l'équipement terminal est mise à disposition par le support de données (10), cependant que la clé publique de session (PKT) de l'équipement terminal est déterminée par exponentiation de la première base (g1), mise à disposition par le support de données (10), avec la clé secrète de session (SKT) de l'équipement terminal.

**9.** Support de données (10) portable selon la revendication 8, **caractérisé en ce que** le support de données (10) est conçu pour s'authentifier vis-à-vis d'un équipement terminal suivant un procédé selon une des revendications de 1 à 7.

**10.** Système comprenant un support de données (10) portable selon selon une des revendications 8 ou 9 ainsi qu'un équipement terminal, conçu pour l'exécution d'un procédé selon une des revendications de 1 à 7.

# FIG 1

# FIG 2

| |
|---|
| Erzeugen des geheimen Gruppenschlüssels SKG und des öffentlichen Gruppenschlüssels PKG |

~S1

| |
|---|
| Erzeugen des Zertifikats $C_{PKG}$ für PKG |

~S2

| |
|---|
| Für einen Datenträger: |

~S3

| |
|---|
| Ableiten des datenträgerinternen geheimen Schlüssels SK1: $= SKG \cdot RND1$ |

TS31

| |
|---|
| Bestimmen einer Basis $g1: = g^{1/RND1}$ |

TS32

| |
|---|
| Speichern von SK1, PKG, g1 und $C_{PKG}$ im Datenträger |

TS33

(A)

# FIG 3

A

Bereitstellen von g1, PKG und $C_{PKG}$
für Terminaleinrichtung — S4

Erzeugen eines geheimen Sitzungsschlüssels
$SK_T$ und eines öffentlichen Sitzungsschlüssels
$PK_T := g_1^{SK_T}$ — S5

Vereinbaren eines geheimen
Kommunikationsschlüssels KK — S6

Prüfung von $C_{PKG}$
durch Terminaleinrichtung — S7

# FIG 4

Ableiten geheimer Sitzungsschlüssel:
$$SK_S := SK1 \cdot RND_S$$

S8

Ersetzen des geheimen Schlüssels durch
den Sitzungsschlüssel $SK1 := SK_S$

S9

Ableiten Sitzungsbasis $g_S := g_1^{1/RND_S}$

S10

Ersetzen der ersten Basis durch die
Sitzungsbasis $g_1 := g_S$

S11

**IN DER BESCHREIBUNG AUFGEFÜHRTE DOKUMENTE**

**In der Beschreibung aufgeführte Patentdokumente**

- EP 0313967 A1
- DE 19527715 A1
- DE 10141396 A1
- DE 102008028701 A1
- WO 2006089101 A2
- DE 102008055076 A1
- US 636188 B2